# EUROPEAN PATENT APPLICATION

(11) **EP 4 390 508 A1**
(43) Date of publication of application: **26.06.2024**
(21) Application number: 22861568.8
(22) Date of filing: 25.07.2022
(51) Int. Cl.: G02B 27/01, G06T 19/00, G06N 3/08

(54) **ELECTRONIC DEVICE AND ELECTRONIC DEVICE CONTROL METHOD**

(30) Priority: 24.08.2021 KR 20210111481
(71) Applicant: Samsung Electronics Co., Ltd., Suwon-si, Gyeonggi-do 16677 (KR)
(72) Inventor: PARK, Seoungyong, Suwon-si Gyeonggi-do 16677 (KR); KIM, Kiwoo, Suwon-si Gyeonggi-do 16677 (KR); HER, Yongkoo, Suwon-si Gyeonggi-do 16677 (KR); JUNG, Taeil, Suwon-si Gyeonggi-do 16677 (KR)
(74) Representative: Appleyard Lees IP LLP
(86) International application number: PCT/KR2022/010914
(87) International publication number: WO 2023/027356

(57) **Abstract**

An electronic device and an electronic device control method are disclosed. Particularly, an electronic device according to the present disclosure comprises: a display comprising a plurality of LEDs; a sensor; a memory; and a processor. In addition, the processor controls the display so that content is displayed, detects temperature according to the heat of the electronic device through the sensor while augmented reality content is displayed on the display, and controls the display so that at least one element from among a plurality of elements included in the augmented reality content is displayed in a preset color, if the detected temperature is greater than or equal to a preset first threshold temperature. Other various embodiments are possible.

## Description

### [Technical Field]

The disclosure relates to an electronic device and a control method of the same, and for example, relates to an electronic device that can reduce heat generation and power consumption in providing a content through LEDs, and a control method of the same.

### [Background Art]

Recently, technologies for providing various contents to users through head mounted displays (HMDs) are developing. For example, AR glasses are a device that a user can wear like wearing glasses and appreciate an augmented reality content, and research related to AR glasses that can provide an augmented reality content of a high resolution while providing convenience when a user wears it is going on.

### [Disclosure]

### [Technical Solution]

AR glasses are implemented by a liquid crystal on silicon (LCoS) method based on OLEDs, and thus have high optical efficiency, but for achieving the high optical efficiency, a shape of a large volume should be brought, and thus there may be limitation in miniaturization and weight lightening.

Meanwhile, AR glasses based on micro LEDs are developing, but while AR glasses based on LEDs are appropriate for miniaturization and weight lightening, power consumption of a high level may be generated due to low light-emitting efficiency of micro LEDs.

For example, in the case of a red LED, as the size of the LED is reduced, there may be a tendency that external quantum efficiency (EQE) decreases exponentially. Not only that, in the case of AR glasses for providing a content through a plurality of LEDs and a waveguide, the LED module needs to emit a light of high luminance as the efficiency of the waveguide is very low, and thus the problem of power consumption can be worsened.

In developing various electronic devices as well as AR glasses, it may be required to reduce power consumption along with miniaturization and weight lightening.

Various embodiments of the disclosure can provide an electronic device that can noticeably reduce heat generation and power consumption in providing a content through LEDs compared to a conventional technology, and a control method of the same.

### [Technical Solution]

According to an embodiment of the disclosure, an electronic device includes a display including a plurality of LEDs, a sensor, a memory, and a processor configured to control the display to display a content, detect a temperature according to heat generation of the electronic device through the sensor while the content is displayed through the display, and based on the detected temperature being greater than or equal to a preset first threshold temperature, control the display to display at least one element among a plurality of elements included in the content in a preset color.

According to an embodiment of the disclosure, a control method of an electronic device includes the steps of displaying a content (an augmented reality content) through a display including a plurality of LEDs, detecting a temperature according to heat generation of the electronic device while the content is displayed through the display, and based on the detected temperature being greater than or equal to a preset first threshold temperature, displaying at least one element among a plurality of elements included in the content in a preset color.

According to an embodiment of the disclosure, a control method of an electronic device includes the steps of displaying a content through a display including a red LED, a green LED, and a blue LED, detecting a temperature according to heat generation of the electronic device while the content is displayed through the red LED, the green LED, and the blue LED, and based on the detected temperature being greater than or equal to a preset fourth threshold temperature, controlling the display such that luminance of a light emitted through the red LED is reduced.

An electronic device according to the disclosure can noticeably reduce heat generation and power consumption in providing a content through LEDs. Other than this, various effects that are directly or indirectly identified through the disclosure can be provided.

### [Description of Drawings]

FIG. 1 is a diagram illustrating a case wherein an electronic device 100 according to the disclosure is implemented as AR glasses;
FIG. 2 is a flow chart illustrating a control method of an electronic device 100 according to an embodiment of the disclosure;
FIG. 3 is a diagram for illustrating in detail types of a plurality of elements according to the disclosure;
FIG. 4 is a graph illustrating a driving method of a plurality of LEDs according to an embodiment of the disclosure;
FIG. 5 to FIG. 7 are diagrams illustrating arrangement of a plurality of LEDs for implementing one pixel according to an embodiment of the disclosure;
FIG. 8 is a flow chart illustrating a control method of an electronic device 100 according to an embodiment of the disclosure;
FIG. 9 is a graph illustrating a driving method of a plurality of LEDs according to an embodiment of the disclosure;
FIG. 10 is a flow chart illustrating a control method of an electronic device 100 according to an embodiment of the disclosure;
FIG. 11 is a graph illustrating a driving method of a plurality of LEDs according to an embodiment of the disclosure;
FIG. 12 is a block diagram illustrating a schematic configuration of an electronic device 100 according to an embodiment of the disclosure; and
FIG. 13 is a block diagram illustrating a detailed configuration of an electronic device according to an embodiment of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include various modifications, equivalents, and/or alternatives of the embodiments of the disclosure. Also, with respect to the detailed description of the drawings, similar components may be designated by similar reference numerals.

Also, in describing the disclosure, in case it is determined that detailed explanation of related known functions or features may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used only to explain specific embodiments, and are not intended to limit the scope of the disclosure. Also, singular expressions include plural expressions, unless defined obviously differently in the context.

Also, in the disclosure, expressions such as "have," "may have," "include," and "may include" denote the existence of such characteristics (e.g.: elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may describe various elements regardless of any order and/or degree of importance. Also, such expressions are used only to distinguish one element from another element, and are not intended to limit the elements.

In addition, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" does not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

In addition, the term "module" used in the various embodiments of the disclosure may include a unit consisting of hardware, software, or firmware, and it may be interchangeably used with terms such as a logic, a logical block, a component, or a circuit. Also, a module may be a component consisting of an integrated body or a minimum unit performing one or more functions or a portion thereof. For example, according to an embodiment, a module may be implemented in a form of an application-specific integrated circuit (ASIC).

Meanwhile, various elements and areas in drawings were illustrated schematically. Accordingly, the technical idea of the disclosure is not limited by the relative sizes or intervals illustrated in the accompanying drawings.

Hereinafter, the embodiments according to the disclosure will be described in detail with reference to the accompanying drawings, such that those having ordinary skill in the art to which the disclosure belongs can easily carry out the disclosure.

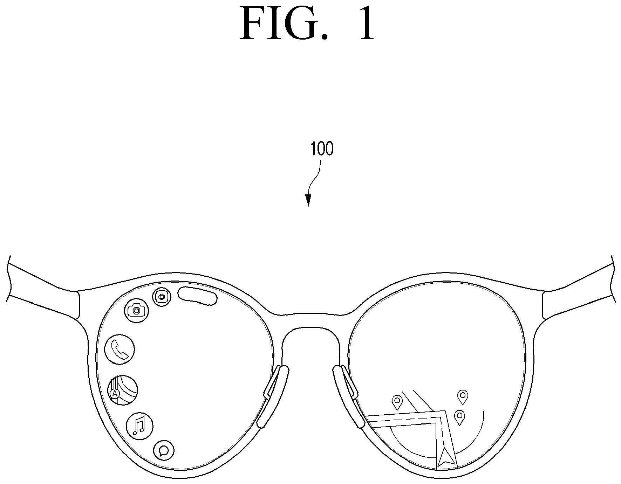

FIG. 1 is a diagram illustrating a case wherein an electronic device 100 according to the disclosure is implemented as AR glasses.

The electronic device 100 according to the disclosure means a device that can display a content through a plurality of light-emitting diodes (LEDs). For example, as illustrated in FIG. 1, the electronic device 100 may be implemented as AR glasses that can display an augmented reality (AR) content, but the disclosure is not limited thereto.

According to an embodiment, the electronic device 100 may be head mounted display (HMD) devices of various types such as a device that can provide a virtual reality (VR) content, a device that can provide a mixed reality (MR) content, a device that can provide an eXtended reality (XR) content, or a device that can provide a substitutional reality (SR) content, etc. Also, any device that can display a content through a plurality of LEDs may correspond to the electronic device 100 according to the disclosure, no matter which type, structure, or shape, etc. it has, as well as an HMD device.

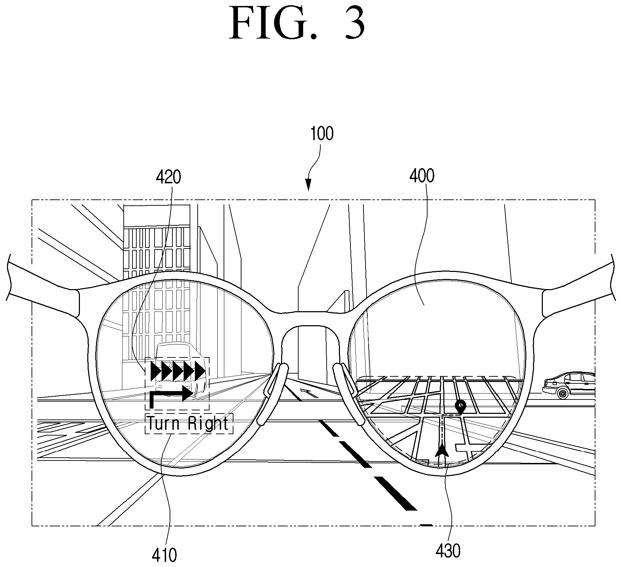

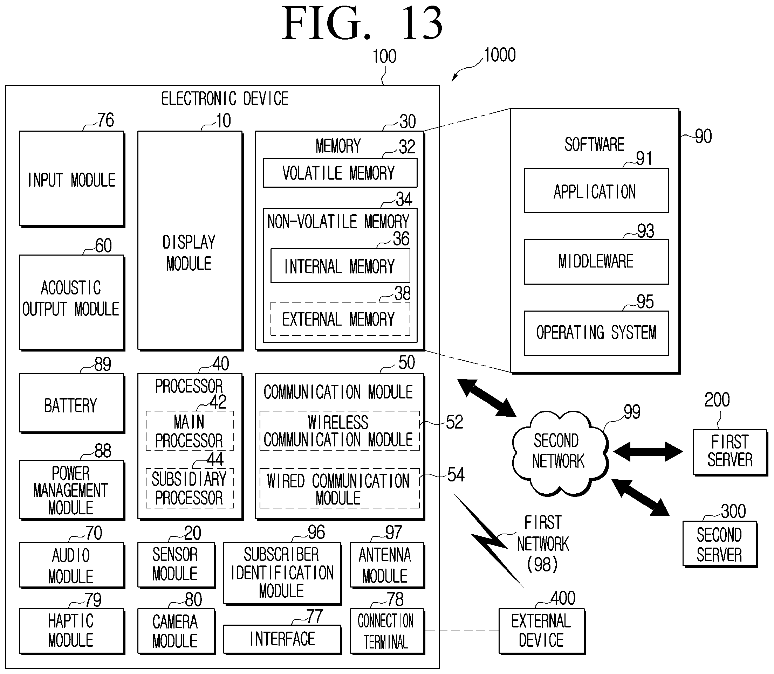

The electronic device 100 may include a display, and display a content together with an image corresponding to a live view in reality through the display. For example, the display may be a transparent display, and the electronic device 100 may display a content while an image corresponding to a live view in reality is displayed through the transparent display. The electronic device 100 may include a camera (e.g.: the camera module 80 in FIG. 13), and display a content together with an image acquired through the camera. Also, the electronic device 100 may display a content together with an image received from an external device (e.g.: the electronic device 200, the server 300, or the electronic device 400 in FIG. 13). Meanwhile, a content displayed through the electronic device 100 may include various elements as illustrated in FIG. 3.

Meanwhile, the electronic device 100 includes a plurality of LEDs, and may include, specifically, a red LED, a green LED, and a blue LED. Here, each of the plurality of LEDs may be a micro LED of which horizontal length and vertical length are respectively about 100*µ*m or smaller. Meanwhile, in the disclosure, each of a red LED, a green LED, and a blue LED is used as a meaning referring to not only a case wherein the LED itself is implemented to emit a light of a red color, a green color, and a blue color, but also a case wherein the LED emits a light of a red color, a green color, and a blue color through a color conversion medium such as a quantum dot.

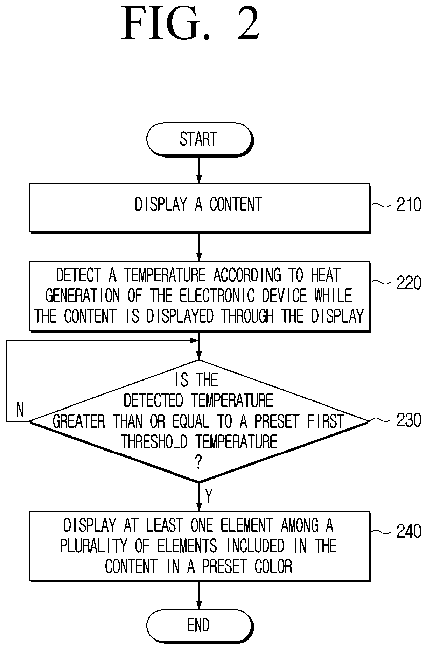

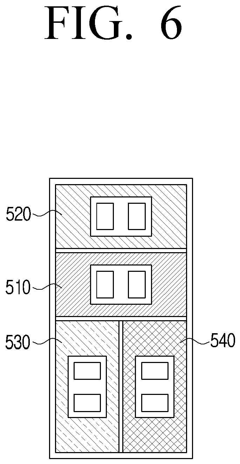

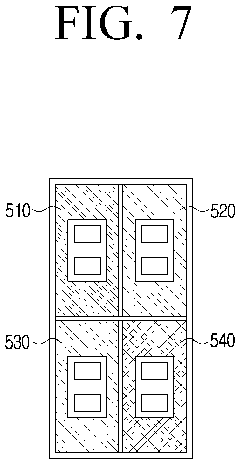

Hereinafter, various embodiments according to the disclosure will be described with reference to FIG. 2 to FIG. 11.

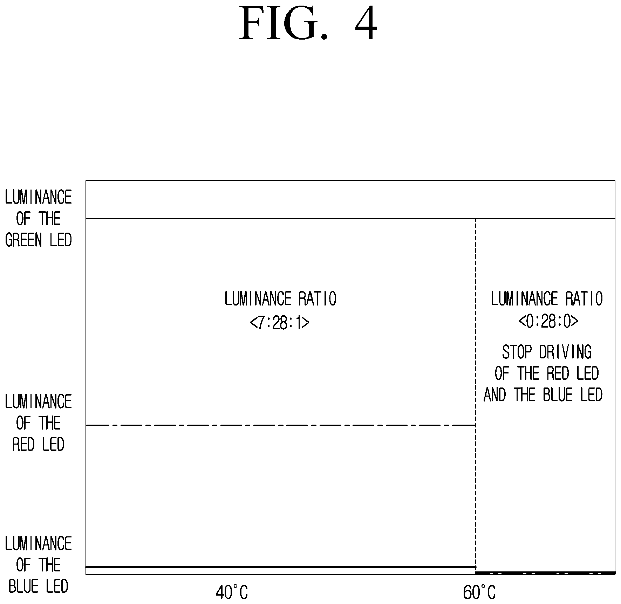

FIG. 2 is a flow chart illustrating a control method of the electronic device 100 according to an embodiment of the disclosure. FIG. 3 is a diagram for illustrating in detail types of a plurality of elements according to the disclosure. Also, FIG. 4 is a graph illustrating a driving method of a plurality of LEDs according to an embodiment of the disclosure. Hereinafter, various embodiments according to the disclosure will be described with reference to FIG. 2 to FIG. 4 together.

As illustrated in FIG. 2, the electronic device 100 may display a content in operation S210. Specifically, the electronic device 100 may receive a content from an external device (e.g.: a smartphone, a smart watch, or a server) communicatively connected with the electronic device 100. Meanwhile, the electronic device 100 may acquire an image corresponding to a live view in reality through the camera included in the electronic device 100. Then, the electronic device 100 may display the image corresponding to the live view and the content together. For example, as illustrated in FIG. 3, the electronic device 100 may overlap an augmented reality content including a plurality of elements 410, 420, 430 on an image 400 corresponding to a live view, and display the content.

While the content is displayed through the display, the electronic device 100 may detect a temperature according to heat generation of the electronic device 100 in operation S220. Specifically, the electronic device 100 may include a sensor (e.g.: the sensor module 20 in FIG. 13), and detect a temperature according to heat generation of the electronic device 100 through the sensor. A portion which becomes a subject for measuring heat generation can be any component included in the electronic device 100, but in case the electronic device 100 is implemented as a head mounted display (HMD) such as AR glasses, it would be preferable to measure a temperature of a portion that contacts a user's body when the electronic device 100 is worn by the user. The electronic device 100 may detect a temperature according to heat generation of the electronic device 100 by a predetermined time interval, and may perform an operation as will be described below according to the detection result.

If the detected temperature is greater than or equal to a preset first threshold temperature in operation S230-Y, the electronic device 100 may display at least one element among the plurality of elements included in the content in a preset color in operation S240. For example, in case the unique color of at least one element is a different color from the preset color, the electronic device 100 may change the color to the preset color, and display it. A specific method of changing the unique color of at least one element to the preset color and displaying it will be described below with reference to FIG. 4.

Meanwhile, 'the preset color' may be one color among red, green, and blue. For example, in case the plurality of LEDs according to the disclosure are micro LEDs, as the light-emitting efficiency of the green LED among the red LED, the green LED, and the blue LED is the highest, the preset color may be set as green. Here, the light-emitting efficiency includes external quantum efficiency (EQE) and internal quantum efficiency (IQE). Hereinafter, explanation will be described based on the premise that the preset color is green, but it is obvious that the preset color according to the disclosure is not limited to a specific color.

Meanwhile, a plurality of elements included in a content may include a text, a still figure, and a moving figure, etc., and the elements may be distinguished as elements consisting of one color and elements consisting of a plurality of colors. Among such various elements, `at least one element' that will be displayed in the preset color according to the disclosure may be identified according to various embodiments as below.

According to an embodiment, in case a detected temperature is greater than or equal to a preset first threshold temperature, the electronic device 100 may display `a text' among a plurality of elements in the preset color. For example, regardless of which color the color of a text included in a content is, if a detected temperature is greater than or equal to the preset first threshold temperature, the electronic device 100 may display the text included in the content in green which is the preset color. Also, in case a text included in a content consists of a plurality of colors, if a detected temperature is greater than or equal to the preset first threshold temperature, the electronic device 100 may display the text included in the content in green which is one color.

According to an embodiment, in case a detected temperature is greater than or equal to the preset first threshold temperature, the electronic device 100 may display `a figure consisting of one color' among a plurality of elements in the preset color. For example, in case a figure included in a content consists of one color, the electronic device 100 may display the figure in green which is the preset color, regardless of which color the color is.

Meanwhile, information on the types of elements that will be displayed in the preset color among a plurality of elements may be stored in advance in the memory of the electronic device 100, and the electronic device 100 may identify an element that will be displayed in the preset color among the plurality of elements based on the information on the types of elements stored in the memory. Here, the types of elements that will be displayed in the preset color may be set differently according to the setting by the developer or a user.

Meanwhile, the electronic device 100 may identify an element that will be displayed in the preset color among a plurality of elements by using a trained neural network model. Specifically, the neural network model may be trained based on learning data including label information for an element that will be displayed in the preset color among a plurality of elements included in a content, and the electronic device 100 may identify the element that will be displayed in the preset color among the plurality of elements by inputting information on the content into the trained neural network model.

In the above, a case of a figure consisting of a text and one color was described as an example of `at least one element' that will be displayed in the preset color according to the disclosure, but the disclosure is not limited thereto. For example, even in the case of a figure consisting of a plurality of colors, if the figure is for transmission of information and is a figure wherein color representation is unnecessary, the figure may be displayed in the preset one color. Also, even in the case of a figure consisting of one color, if the figure is a moving figure, the color of the figure may not be changed to green and displayed, for securing visibility.

For example, as illustrated in FIG. 3, the electronic device 100 may display "a text 410 which is Turn Right" among a plurality of elements included in a content in green. Then, the electronic device 100 may display "a figure 420 for transmitting information guiding to proceed to the right side" among the plurality of elements included in the content in green. Here, "the figure 420 for transmitting information guiding to proceed to the right side" may be a figure consisting of one color, and it may have been identified as at least one element to be displayed in green based on the fact that it may be a still figure displayed in a fixed location.

Meanwhile, the electronic device 100 may not change the color of "a figure 430 for indicating the current location of the electronic device 100" among the plurality of elements included in the content to green, but display the figure according to the unique color of the figure. Here, "the figure 430 for indicating the current location of the electronic device 100" may consist of a plurality of colors, and it may not have been identified as at least one element to be displayed in green based on the fact that it is a figure in a form wherein at least a part of it moves as the current location of the electronic device 100 is changed.

Meanwhile, if the detected temperature is smaller than the preset first threshold temperature in operation S230-N, the electronic device 100 may not display at least one element among the plurality of elements included in the content in the preset color but display it in the unique color of the at least one element, and may detect a temperature according to heat generation of the electronic device 100 again.

Meanwhile, in the above, an embodiment wherein at least one element among a plurality of elements included in a content is displayed in the preset color in case a detected temperature is greater than or equal to the preset first threshold temperature was described in detail, and it is obvious that the first threshold temperature can be changed to various temperatures such as about 40 degrees Celsius or about 60 degrees Celsius, etc. according to the setting by the developer or a user. Hereinafter, expressions such as 'about' or `approximately' in the disclosure are only for indicating that the numerical ranges according to the disclosure are not limited to specific numerical ranges, but can be modified according to the setting by the developer or a user within a range for achieving the purpose of the disclosure. Accordingly, the application range according to the disclosure should not be interpreted unclearly according to expressions such as 'about' or 'approximately.'

FIG. 4 is a diagram for illustrating an operation of, in case the preset first threshold temperature is about 60 degrees Celsius, and at least one element to be displayed in green which is the preset color was identified, implementing pixels of the display corresponding to the at least one element.

In an embodiment, each pixel constituting the display of the electronic device 100 may correspond to a red LED, a green LED, and a blue LED. Accordingly, each of the pixels corresponding to at least one element may also be implemented through a red LED, a green LED, and a blue LED corresponding thereto. In FIG. 4, driving of a red LED, a green LED, and a blue LED for implementing one pixel among pixels corresponding to at least one element will be described.

Also, if a temperature according to heat generation of the electronic device 100 is smaller than about 60 degrees Celsius, the electronic device 100 may normally drive a red LED, a green LED, and a blue LED corresponding to at least one element, and implement each pixel corresponding to the at least one element. Here, the feature of normally driving a red LED, a green LED, and a blue LED means driving the LEDs while maintaining the luminance ratio according to the red LED, the green LED, and the blue LED to a preset ratio. For example, as illustrated in FIG. 4, the feature of normally driving a red LED, a green LED, and a blue LED may mean driving the LEDs while maintaining the luminance ratio according to the red LED, the green LED, and the blue LED to 7:28: 1.

If a temperature according to heat generation of the electronic device 100 is greater than or equal to about 60 degrees Celsius, the electronic device 100 may stop driving of a red LED and a blue LED corresponding to at least one element and maintain driving of a green LED, and may thereby display the at least one element in green. For example, as illustrated in FIG. 4, the electronic device 100 may adjust the luminance ratio according to the red LED, the green LED, and the blue LED to be 0:28:0, and display the at least one element in green.

Meanwhile, in FIG. 4, operations for each of a case wherein a detected temperature is smaller than about 60 degrees Celsius which is the preset first threshold temperature and a case wherein a detected temperature is greater than or equal to about 60 degrees Celsius were described, but the first threshold temperature may include a plurality of sub threshold temperatures, and different operations may be performed according to the plurality of sub threshold temperatures. For example, in case the first threshold temperature includes a first sub threshold temperature (e.g.: 40 degrees Celsius) and a second sub threshold temperature (e.g.: 60 degrees Celsius) higher than the first sub threshold temperature, if a temperature according to heat generation of the electronic device 100 is greater than or equal to the first sub threshold temperature, the luminance ratio of the red LED and the blue LED may be decreased, and if a temperature according to heat generation of the electronic device 100 is greater than or equal to the second sub threshold temperature, driving of the red LED and the blue LED may be stopped. In this case, the luminance ratio of the red LED and the blue LED may be linearly decreased as the temperature according to heat generation of the electronic device 100 increases from the first sub threshold temperature to the second sub threshold temperature.

Meanwhile, in case the first threshold temperature includes a plurality of sub threshold temperatures, the luminance ratio of the red LED and the blue LED may be changed in a stair stepping manner. For example, a change step (e.g.: the ratio) of stair stepping may be set based on the difference between the first sub threshold temperature and the second sub threshold temperature. For example, if the difference between the first sub threshold temperature and the second sub threshold temperature is greater than or equal to 15 degrees Celsius (e.g.: 20 degrees Celsius), the luminance ratio of the red LED and the blue LED may be reduced to a ratio of 20%, and if the difference between the first sub threshold temperature and the second sub threshold temperature is smaller than 15 degrees Celsius (e.g.: 10 degrees Celsius), the luminance ratio of the red LED and the blue LED may be reduced to a ratio of 30%.

In the above, driving of a red LED, a green LED, and a blue LED for implementing one pixel among pixels corresponding to at least one element was described, but this is just for the convenience of explanation. For example, in actual implementation, driving of all red LEDs and blue LEDs for implementing entire pixels corresponding to at least one element may be stopped, and all green LEDs may be driven. Alternatively, only driving of red LEDs and blue LEDs for implementing some of the pixels corresponding to the at least one element may be stopped, and only green LEDs for implementing some of the pixels corresponding to the at least one element may be driven.

Table 1 is for describing an effect of reducing current consumption in a case of driving only green LEDs compared to a case of driving all of red LEDs, green LEDs, and blue LEDs. The case of Table 1 is a result acquired based on the premise of a case wherein red LEDs, green LEDs, and blue LEDs are so-called micro LEDs, but as described above, the disclosure is not limited to a case of being implemented through micro LEDs.

**[Table 1]**

| | Drive all of red/green/blue LEDs | Drive only green LEDs | Saving rate |
|---|---|---|---|
| 60nit (nA) | 294 | 88 | 70.0% |
| 126nit (nA) | 512 | 138 | 73.1% |
| 600nit (nA) | 1908 | 479 | 74.9% |

As indicated in Table 1, when based on the luminance of 60nit, 126nit, and 600nit respectively, it was identified that the saving rates of current consumption in the case of driving only green LEDs were 70.0%, 73.1%, and 74.9% respectively, compared to the case of driving all of red LEDs, green LEDs, and blue LEDs.

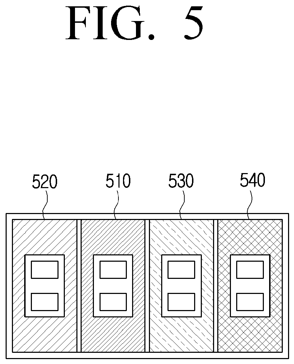

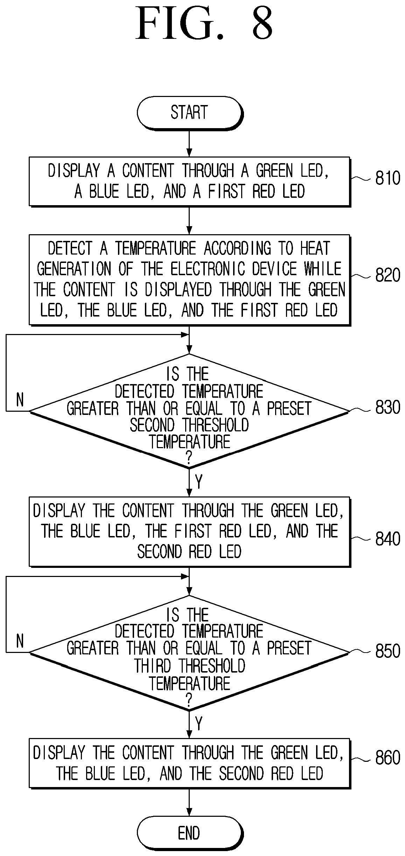

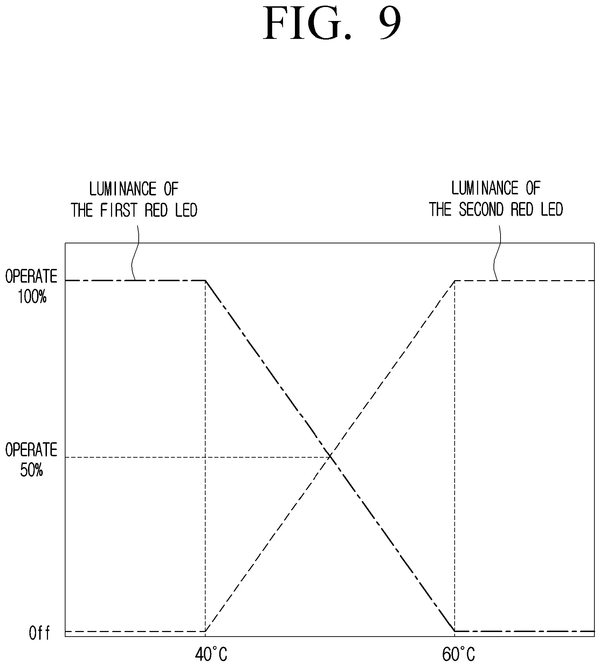

FIG. 5 to FIG. 7 are diagrams illustrating arrangement of a plurality of LEDs for implementing one pixel according to an embodiment of the disclosure. FIG. 8 is a flow chart illustrating a control method of the electronic device 100 according to an embodiment of the disclosure. Also, FIG. 9 is a graph illustrating a driving method of a plurality of LEDs according to an embodiment of the disclosure. Hereinafter, various embodiments according to the disclosure will be described with reference to FIG. 5 to FIG. 9 together.

According to an embodiment of the disclosure, the plurality of LEDs may include a green LED 530, a blue LED 540, a first red LED 510, and a second red LED 520 emitting a light of a central wavelength longer than the first red LED 510. For example, each of the plurality of pixels constituting the display of the electronic device 100 may be implemented by at least some of the first red LED 510, the second red LED 520, the green LED 530, and the blue LED 540.

For example, the first red LED 510, the second red LED 520, the green LED 530, and the blue LED 540 may be arranged in forms as in FIG. 5, FIG. 6, or FIG. 7. Here, the central wavelength of a light emitted through the first red LED 510 may be greater than or equal to 630nm and smaller than 650nm, and the central wavelength of a light emitted through the second red LED 520 may be greater than or equal to 615nm and smaller than 630nm.

According to an embodiment, the central wavelength of a light emitted through the second red LED 520 may be from 625nm to 615nm. The reason for this is that the power consumption may increase and the power consumption efficiency may be degraded in a case wherein the central wavelength of a light becomes greater than or equal to 625nm compared to a case wherein the central wavelength is smaller than 625nm, and in contrast, in a case wherein the central wavelength becomes smaller than 615nm, the visibility characteristic may be changed compared to a case wherein the central wavelength is greater than or equal to 615nm, and a light of a red color of which color has been warped may be emitted.

According to an embodiment, the central wavelength of a light emitted through the first red LED 510 may be 640nm, and the central wavelength of a light emitted through the second red LED 520 may be 625nm. This is according to consideration of both the fact that the power consumption efficiency becomes lower as the central wavelength of a light has a higher bandwidth, and the fact that the visibility characteristic becomes degraded in a case wherein the central wavelength has an excessively high or low bandwidth.

According to an embodiment, the central wavelength of a light emitted through the first red LED 510 may be 640nm, and the central wavelength of a light emitted through the second red LED 520 may be 615nm. The central wavelength may be set as 615nm because the visibility characteristic of a red color is secured although warping of color impression is generated in a case wherein the central wavelength of a light is 615nm compared to a case wherein the central wavelength is 625nm, and the power consumption efficiency can be improved greatly compared to a case wherein the central wavelength is 625nm.

Meanwhile, FIG. 5 to FIG. 7 merely exemplarily illustrate the arrangement relation of the first red LED 510, the second red LED 520, the green LED 530, and the blue LED 540 according to the disclosure, and it is obvious that the first red LED 510, the second red LED 520, the green LED 530, and the blue LED 540 can be arranged in a different manner from what is illustrated in FIG. 5 to FIG. 7.

Referring to FIG. 8, the electronic device 100 may display a content through the green LED 530, the blue LED 540, and the first red LED 510 in operation S810. For example, the electronic device 100 may display a content by driving only the first red LED 510 emitting a light having a longer central wavelength from among the first red LED 510 and the second red LED 520, together with the green LED 530 and the blue LED 540. In other words, in a case wherein the temperature according to heat generation of the electronic device 100 is smaller than a preset second threshold temperature (e.g.: about 40 degrees Celsius in FIG. 9), the electronic device 100 may display a content by using the first red LED 510 emitting a light having a longer central wavelength from among the first red LED 510 and the second red LED 520 for securing the visibility characteristic rather than for saving power consumption.

The electronic device 100 may detect the temperature according to heat generation of the electronic device 100 while a content is displayed through the green LED 530, the blue LED 540, and the first red LED 510 in operation S820, and if the detected temperature is greater than or equal to the preset second threshold temperature in operation S830-Y, the electronic device 100 may display the content through the first red LED 510, the second red LED 520, the green LED 530, and the blue LED 540 in operation S840. For example, if the detected temperature is greater than or equal to the preset second threshold temperature, the electronic device 100 may display the content by driving all of the first red LED 510 and the second red LED 520, together with the green LED 530 and the blue LED 540. In other words, if the temperature according to heat generation of the electronic device 100 becomes greater than or equal to the preset second threshold temperature, the electronic device 100 may display the content by using a method of lowering the luminance according to the first red LED 510 and heightening the luminance according to the second red LED 520, for improving the effect of saving power consumption even if the visibility characteristic is rather degraded.

According to an embodiment, if the detected temperature is smaller than the preset second threshold temperature in operation S830-N, the electronic device 100 may maintain the operation of displaying the content through the green LED 530, the blue LED 540, and the first red LED 510, and may detect the temperature according to heat generation of the electronic device 100 again.

If the detected temperature is greater than or equal to a preset third threshold temperature set as a value bigger than the second threshold temperature (e.g.: about 60 degrees Celsius in FIG. 9) in operation S850-Y, the electronic device 100 may display the content through the green LED 530, the blue LED 540, and the second red LED 520 in operation S860. For example, if the detected temperature exceeds the preset second threshold temperature and becomes greater than or equal to the third threshold temperature, the electronic device 100 may display the content by driving only the second red LED 520 emitting a light of a shorter central wavelength from among the first red LED 510 and the second red LED 520, together with the green LED 530 and the blue LED 540. In other words, if the temperature according to heat generation of the electronic device 100 becomes greater than or equal to the preset third threshold temperature, the electronic device 100 may display the content by using the second red LED 520 emitting a light having a shorter central wavelength from among the first red LED 510 and the second red LED 520, for further improving the effect of saving power consumption even if the visibility characteristic is degraded more than a case of using the method of lowering the luminance according to the first red LED 510 and heightening the luminance according to the second red LED 520.

According to an embodiment, if the detected temperature is smaller than the preset third threshold temperature in operation S850-N, the electronic device 100 may maintain the operation of displaying the content through the first red LED 510, the second red LED 520, the green LED 530, and the blue LED 540, and may detect the temperature according to heat generation of the electronic device 100 again.

FIG. 9 is a diagram for exemplarily illustrating a method of driving the first red LED 510 and the second red LED 520 according to a section of a temperature according to heat generation of the electronic device 100 in case the preset second threshold temperature is about 40 degrees Celsius and the preset third threshold temperature is about 60 degrees Celsius. In FIG. 9, only driving of the first red LED 510 and the second red LED 520 is illustrated, but this is based on the premise that the luminance of the green LED 530 and the blue LED 540 is maintained regardless of the temperature according to heat generation of the electronic device 100.

Specifically, if the temperature according to heat generation of the electronic device 100 is smaller than about 40 degrees Celsius, the electronic device 100 may drive only the first red LED 510 emitting a light of a longer central wavelength from among the first red LED 510 and the second red LED 520. For example, if the temperature according to heat generation of the electronic device 100 is smaller than about 40 degrees Celsius, the electronic device 100 may operate the first red LED 510 by 100%, and stop the driving of the second red LED 520.

If the temperature according to heat generation of the electronic device 100 is greater than or equal to about 40 degrees Celsius, the electronic device 100 may decrease the luminance ratio of the first red LED 510 and increase the luminance ratio of the second red LED 520. For example, if the temperature according to heat generation of the electronic device 100 becomes greater than or equal to about 40 degrees Celsius, the electronic device 100 may linearly decrease the luminance ratio of the first red LED 510, and linearly increase the luminance ratio of the second red LED 520 to be inversely proportional to the decrease of the luminance ratio of the first red LED 510.

Further, if the temperature according to heat generation of the electronic device 100 is greater than or equal to about 60 degrees Celsius, the electronic device 100 may drive only the second red LED 520 emitting a light of a shorter central wavelength from among the first red LED 510 and the second red LED 520. If the temperature according to heat generation of the electronic device 100 becomes greater than or equal to about 60 degrees Celsius, the electronic device 100 may stop the driving of the first red LED 510, and operate the second red LED 520 by 100%.

In FIG. 9, a case wherein the luminance ratio of the first red LED 510 is linearly decreased, and the luminance ratio of the second red LED 520 is linearly increased to correspond thereto is illustrated, but this is merely an example, and a form of increase/decrease of the luminance ratios can be implemented in various ways depending on embodiments.

According to an embodiment, the luminance ratio of the first red LED 510 and the luminance ratio of the second red LED 520 may decrease or increase in a stair stepping manner. Specifically, data regarding the luminance ratios that decrease or increase in a stair stepping manner may be stored in a form of a look-up table in the memory of the electronic device 100, and the electronic device 100 may decrease or increase the luminance ratio of the first red LED 510 and the luminance ratio of the second red LED 520 in a stair stepping manner based on the data regarding the luminance ratios stored in the memory.

For example, if the temperature according to heat generation of the electronic device 100 is greater than or equal to about 40 degrees Celsius, the electronic device 100 may decrease the luminance ratio of the first red LED 510 by 20%, and increase the luminance ratio of the second red LED 520 by 20%. If the temperature according to heat generation of the electronic device 100 is greater than or equal to about 50 degrees Celsius, the electronic device 100 may decrease the luminance ratio of the first red LED 510 by 30%, and increase the luminance ratio of the second red LED 520 by 30%. Meanwhile, the ratio that the luminance of the first red LED 510 increases and the ratio that the luminance of the second red LED 520 decreases do not necessarily have to coincide, and for example, the luminance ratio of the second red LED 520 can obviously be increased by 10% while the luminance ratio of the first red LED 510 is being decreased by 20%.

Meanwhile, in the above, an embodiment wherein the luminance of the first red LED 510 is decreased and the luminance of the second red LED 520 is increased in case the temperature according to heat generation of the electronic device 100 is greater than or equal to the preset second threshold temperature, based on the premise of a driving method of the first red LED 510 and the second red LED 520 for implementing one pixel was described in detail, but the disclosure is not limited thereto. According to another embodiment, the entire pixels for displaying a content may be implemented through the first LED, and as the temperature according to heat generation of the electronic device 100 increases, the ratio that the first red LED 510 that is being driven is replaced by the second red LED 520 may be increased.

Table 2 and Table 3 are for illustrating an effect of reducing current consumption in a case of driving the second red LED 520 emitting a light having a central wavelength of 625nm compared to a case of driving the first red LED 510 emitting a light having a central wavelength of 640nm, based on the premise that the LEDs according to the disclosure are micro LEDs.

**[Table 2]**

| | Drive a red LED of 640nm | Drive a red LED of 625nm | Saving rate |
|---|---|---|---|
| 60nit (nA) | 161 | 96 | 40.4% |
| 126nit (nA) | 283 | 169 | 40.3% |
| 600nit (nA) | 1164 | 693 | 40.5% |

**[Table 3]**

| | Drive a red LED, a green LED, and a blue LED of 640nm | Drive a red LED, a green LED, and a blue LED of 625nm | Saving rate |
|---|---|---|---|
| 60nit (nA) | 294 | 229 | 22.1% |
| 126nit (nA) | 512 | 398 | 22.3% |
| 600nit (nA) | 1908 | 1437 | 24.7% |

As indicated in table 2, when based on the luminance of 60nit, 126nit, and 600nit respectively, it was identified that the saving rates of current consumption in the case of driving the second red LED 520 emitting a light having a central wavelength of 625nm were 40.4%, 40.3%, and 40.5% respectively, compared to the case of driving the first red LED 510 emitting a light having a central wavelength of 640nm. Also, as indicated in Table 2, when based on the luminance of 60nit, 126nit, and 600nit respectively, it was identified that the saving rates of current consumption in the case of driving the second red LED 520 emitting a light having a central wavelength of 625nm together with the same green LED 530 and the same blue LED 540 were 22.1%, 22.3%, and 24.7% respectively, compared to the case of driving the first red LED 510 emitting a light having a central wavelength of 640nm together with the green LED 530 and the blue LED 540. According to an embodiment, if the temperature according to heat generation of the electronic device 100 is greater than or equal to about 60 degrees Celsius, the electronic device 100 may stop the driving of both the first red LED 510 and the second red LED 520. If the driving of both the first red LED 510 and the second red LED 520 is stopped, the power consumption can be decreased to about 55% compared to the case of driving the first red LED 510 emitting a light having a central wavelength of 640nm together with the green LED 530 and the blue LED 540.

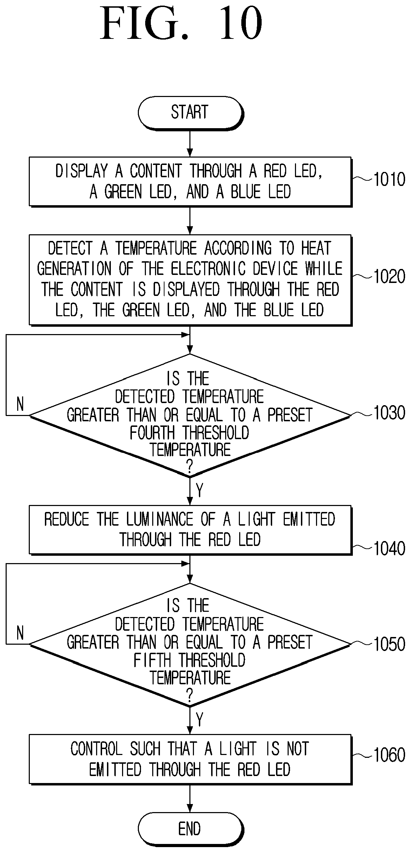

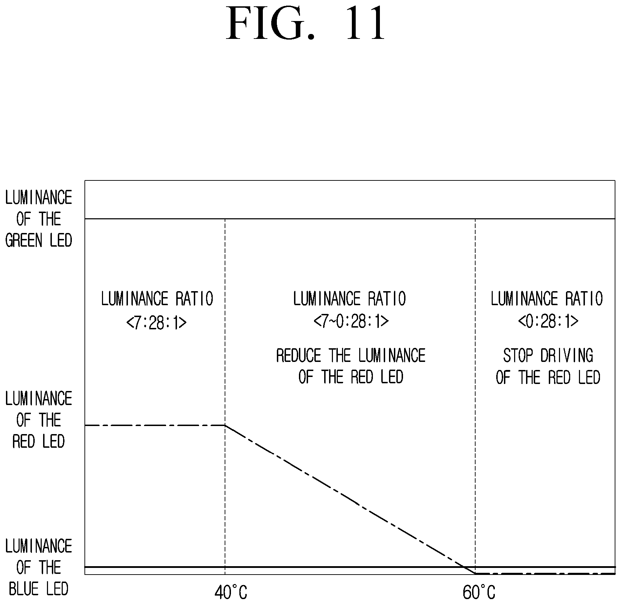

FIG. 10 is a flow chart illustrating a control method of the electronic device 100 according to an embodiment of the disclosure. Also, FIG. 11 is a graph illustrating a driving method of a plurality of LEDs according to an embodiment of the disclosure. Hereinafter, various embodiments according to the disclosure will be described with reference to FIG. 9 and FIG. 10 together.

Specifically, each of the pixels constituting the display of the electronic device 100 may correspond to a red LED, a green LED, and a blue LED. Accordingly, each of the pixels corresponding to at least one element may be implemented through a red LED, a green LED, and a blue LED corresponding thereto.

Referring to FIG. 10, the electronic device 100 may display a content through a red LED, a green LED, and a blue LED in operation S1010. For example, as illustrated in FIG. 11, the electronic device 100 may drive a red LED, a green LED, and a blue LED such that the luminance ratios according to each of the red LED, the green LED, and the blue LED become 7:28:1.

Then, the electronic device 100 may detect the temperature according to heat generation of the electronic device 100 while the content is displayed through the green LED, the blue LED, and the red LED in operation S1020.

If the detected temperature is greater than or equal to a preset fourth threshold temperature (e.g.: the fourth threshold temperature in FIG. 11, or about 40 degrees Celsius) in operation S1030-Y, the electronic device 100 may decrease the luminance of a light emitted through the red LED in operation S1040. For example, as illustrated in FIG. 11, the electronic device 100 may drive the red LED, the green LED, and the blue LED such that the luminance ratios according to each of the red LED, the green LED, and the blue LED decrease from 7:28: 1 to 0:28: 1.

According to an embodiment, if the detected temperature is greater than or equal to the preset fourth threshold temperature, the electronic device 100 may linearly decrease the luminance of a light emitted through the red LED until the detected temperature becomes greater than or equal to a fifth threshold temperature. For example, the luminance of the light emitted through the red LED may linearly decrease as the temperature according to heat generation of the electronic device 100 increases from about 40 degrees Celsius to about 60 degrees Celsius. However, the form of decrease of the luminance is not limited to a linear form, and the luminance of the light emitted through the red LED may be decreased in a stair stepping manner as described above in the explanation regarding FIG. 4 and FIG. 9.

According to an embodiment, if the detected temperature is smaller than the preset fourth threshold temperature in operation S1030-N, the electronic device 100 may maintain the luminance of the light emitted through the red LED without decreasing it, and may detect whether the temperature according to heat generation of the electronic device 100 is greater than or equal to the preset fourth threshold temperature again.

If the detected temperature is greater than or equal to a fifth threshold temperature set as a value bigger than the fourth threshold temperature (e.g.: the fifth threshold temperature in FIG. 11, or about 60 degrees Celsius) in operation S1050-Y, the electronic device 100 may not emit a light through the red LED in operation S1060. For example, if the temperature according to heat generation of the electronic device 100 exceeds the preset fourth threshold temperature and becomes greater than or equal to the fifth threshold temperature, the electronic device 100 may stop the driving of the red LED, as illustrated in FIG. 11.

According to an embodiment, if the detected temperature is smaller than the preset fifth threshold temperature in operation S1050-N, the electronic device 100 may maintain the operation of emitting the light through the red LED, without controlling such that a light is not emitted through the red LED, and may detect whether the temperature according to heat generation of the electronic device 100 is greater than or equal to the preset fifth threshold temperature again.

In the above, driving of a red LED, a green LED, and a blue LED for implementing one pixel among the entire pixels for displaying a content was explained, but this is only for the convenience of explanation. That is, in actual implementation, the luminance of all red LEDs for implementing the entire pixels for displaying a content may be decreased or stopped, or the luminance of the red LEDs for implementing some of the pixels for displaying a content may be decreased or stopped.

According to the various embodiments described in detail with reference to FIG. 1 to FIG. 11 above, the electronic device 100 can noticeably reduce heat generation and power consumption of the electronic device 100 in providing a content through LEDs compared to the conventional technology.

Meanwhile, in the above, the embodiment described in detail with reference to FIG. 2 to FIG. 4, the embodiment described in detail with reference to FIG. 5 to FIG. 9, and the embodiment described in detail with reference to FIG. 10 and FIG. 11 were explained by distinguishing the embodiments, but two or more embodiments among these embodiments can obviously be combined, and the effect of saving the heat generation and power consumption of the electronic device 100 can become more noticeable according to combination of the embodiments.

Meanwhile, the control method of the electronic device 100 according to the aforementioned embodiments may be implemented as a program and provided to the electronic device 100. In particular, a program including the control method of the electronic device 100 may be provided while being stored in a non-transitory computer readable medium or a non-transitory machine readable storage device.

Specifically, in a non-transitory computer readable recording medium or a non-transitory machine readable storage device including a program executing the control method of the electronic device 100, the control method of the electronic device 100 includes the steps of displaying a content through a display including a plurality of LEDs, detecting a temperature according to heat generation of the electronic device 100 while the content is displayed through the display, and based on the detected temperature being greater than or equal to a preset first threshold temperature, displaying at least one element among a plurality of elements included in the content in a preset color.

In the above, the control method of the electronic device 100, and a non-transitory computer readable recording medium or a non-transitory machine readable storage device including a program executing the control method of the electronic device 100 were explained briefly, but this is just for omitting overlapping explanation, and the various embodiments regarding the electronic device 100 can obviously be applied to the control method of the electronic device 100, and a non-transitory computer readable recording medium or a non-transitory machine readable storage device including a program executing the control method of the electronic device 100.

Also, the various embodiments of the disclosure can be implemented as software (e.g.: a program 90) including one or more instructions stored in a storage medium (e.g.: an internal memory 36 or an external memory 38) that is readable by a machine (e.g.: the electronic device 100). For example, the processor (e.g.: the processor 40) of the device (e.g.: the electronic device 100) may call at least one instruction from one or more stored instructions from the storage medium, and execute the instruction. This enables the device to be operated to perform at least one function according to the at least one called instruction. The at least one instruction may include a code generated by a compiler or a code that can be executed by an interpreter. A storage medium that is readable by a machine may be provided in the form of a non-transitory storage medium. Here, the term `non-transitory' only means that the storage medium is a tangible device, and does not include a signal (e.g.: an electromagnetic wave), and the term does not distinguish a case wherein data is stored semi-permanently in a storage medium and a case wherein data is stored temporarily.

According to an embodiment, the method according to the various embodiments described in the disclosure may be provided while being included in a computer program product. A computer program product refers to a product, and it can be traded between a seller and a buyer. A computer program product can be distributed in the form of a storage medium that is readable by machines (e.g.: a compact disc read only memory (CD-ROM)), or may be distributed directly between two user devices (e.g.: smartphones), and distributed on-line (e.g.: download or upload) through an application store (e.g.: Play Store ^{™}). In the case of on-line distribution, at least a portion of a computer program product (e.g.: a downloadable app) may be stored in a machine readable storage medium such as the server of the manufacturer, the server of the application store, and the memory of the relay server at least temporarily, or may be generated temporarily.

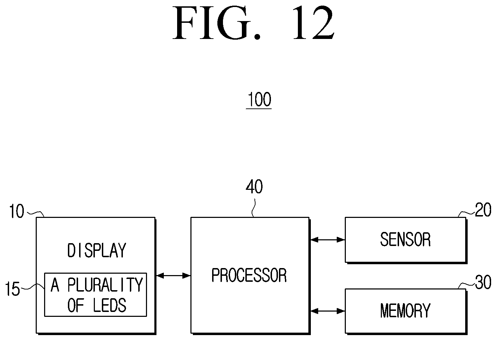

FIG. 12 is a block diagram illustrating a schematic configuration of the electronic device 100 according to an embodiment of the disclosure.

As illustrated in FIG. 12, the electronic device 100 according to an embodiment of the disclosure includes a display 10 (e.g.: the display module 10 in FIG. 13), a sensor 20 (e.g.: the sensor module 20 in FIG. 13), a memory 30 (e.g.: the memory 30 in FIG. 13), and a processor 40 (e.g.: the processor 40 in FIG. 14). However, the components as illustrated in FIG. 12 are merely exemplary ones, and it is obvious that in carrying out the disclosure, new components can be added in addition to the components as illustrated in FIG. 12, or some components can be omitted.

The display 10 may output an image. According to an embodiment, the processor 40 may display a content, e.g., an image corresponding to a content on the display 10. The processor 40 may display an image on the display 10 based on image data prestored in the memory 30. Also, the processor 40 may receive image data from an external device, and display an image on the display 10 based on the received data.

According to an embodiment, the processor 40 may display a content together with an image corresponding to a live view in reality through the display 10. For example, the display 10 may be a transparent display 10, and the processor 40 may control the display 10 to display a content while an image corresponding to a live view in reality is displayed. Also, the electronic device 100 may include a camera (e.g.: the camera module 80 in FIG. 13), and the processor 40 may control the display 10 to display a content together with an image acquired through the camera. Also, the processor 40 may control the display 10 to display a content together with an image received from an external device.

The display 10 may include a plurality of LEDs 15, and may include, specifically, red LEDs, green LEDs, and blue LEDs. Here, each of the plurality of LEDs 15 may be a micro LED of which horizontal length and vertical length are approximately smaller than or equal to 100*µ*m. Meanwhile, in the disclosure, each of a red LED, a green LED, and a blue LED is used for referring to not only a case wherein the LED itself is implemented to emit a light of a red color, a green color, and a blue color, but also a case wherein the LED emits a light of a red color, a green color, and a blue color through a color conversion medium such as a quantum dot.

According to another embodiment, the display 10 may include red LEDs, green LEDs, and blue LEDs, and may include a reflection partition wall for preventing leakage of lights emitted through each of the red LEDs, the green LEDs, and the blue LEDs. For example, the display 10 may be constituted to implement the pixels of the display 10 through a native LED method. Also, the display 10 may include a first panel including a plurality of red LEDs, a second panel including a plurality of green LEDs, and a third panel including a plurality of blue LEDs, and may also be implemented in a form of including a prism (e.g.: an X-cube prism) for collecting lights emitted from the first panel to the third panel. Meanwhile, in the disclosure, each of a red LED, a green LED, and a blue LED may not only be implemented such that the LED itself is implemented to emit a light of a red color, a green color, and a blue color, but also be implemented such that the LED emits a light of a red color, a green color, and a blue color through a color conversion medium such as a quantum dot.

The sensor 20 may detect various kinds of information inside and outside the electronic device 100. Specifically, the sensor 20 may include at least one of a global positioning system (GPS) sensor 20, a gyro sensor (a gyroscope) 20, an acceleration sensor (an accelerometer) 20, a light detection and ranging (LiDAR) sensor 20, an inertial sensor (an inertial measurement unit (IMU)) 20, or a motion sensor 20. Not only that, the sensor 20 may include various kinds of sensors 20 such as a temperature sensor 20, a humidity sensor 20, an infrared sensor 20, a bio sensor 20, etc.

In particular, in the various embodiments according to the disclosure, the temperature sensor 20 may detect a temperature according to heat generation of the electronic device 100, and the processor 40 may acquire information on the temperature through the temperature sensor 20. A portion which becomes a subject for measuring heat generation can be any component included in the electronic device 100, but in case the electronic device 100 is implemented as a head mounted display (HMD) such as AR glasses, it would be preferable to measure a temperature of a portion that contacts a user's body when the electronic device 100 is worn by the user. The electronic device 100 may detect the temperature according to heat generation of the electronic device 100 by a predetermined time interval. According to an embodiment, the temperature sensor 20 may consist of a thermistor, and may exhibit an electric property that the resistance decreases as the temperature increases. The electronic device 100 may change a thermal signal generated from a heat source (a heat generation source) into an electric signal by using the thermistor.

In the memory 30, at least one instruction regarding the electronic device 100 may be stored. Also, in the memory 30, an operating system (O/S) for driving the electronic device 100 may be stored. In addition, in the memory 30, various kinds of software programs or applications for the electronic device 100 to operate according to the various embodiments of the disclosure may be stored. Further, in the memory 30, a semiconductor memory 30 such as a flash memory 30, etc. or a magnetic storage medium such as a hard disk, etc. may be included.

Specifically, in the memory 30, various kinds of software modules for the electronic device 100 to operate according to the various embodiments of the disclosure may be stored, and the processor 40 may control the operations of the electronic device 100 by executing the various kinds of software modules stored in the memory 30. That is, the memory 30 may be accessed by the processor 40, and reading/recording/correction/deletion/update, etc. by the processor 40 may be performed.

Meanwhile, in the disclosure, the term `memory 30' may be used as a meaning including the memory 30, a RAM (not shown) and a ROM (not shown) inside the processor 40, or a memory 30 card (not shown) (e.g., a micro SD card, a memory 30 stick, etc.) installed on the electronic device 100.

In particular, in the various embodiments according to the disclosure, in the memory 30, data corresponding to various contents may be stored. Also, in the memory 30, various kinds of information inside and outside the electronic device 100 acquired through the sensor 20 may be stored. Further, in the memory 30, various kinds of information such as information on the threshold temperatures according to the disclosure, information on the types of elements to be displayed in the preset colors among the plurality of elements, information on a neural network model for identifying the elements to be displayed in the preset colors among the plurality of elements, and information on the driving power and the luminance for driving the plurality of elements 15, or data may be stored.

Other than the above, various kinds of necessary information within a range for achieving the purpose of the disclosure may be stored in the memory 30, and the information stored in the memory 30 may be updated as it is received from an external device or is input by a user.

The processor 40 controls the overall operations of the electronic device 100. For example, the processor 40 may be connected to the components of the electronic device 100 including the display 10, the sensor 20, and the memory 30, and may control the overall operations of the electronic device 100 by executing at least one instruction stored in the memory 30.

The processor 40 may be implemented in various ways. For example, the processor 40 may be implemented as at least one of an application specific integrated circuit (ASIC), an embedded processor 40, a microprocessor 40, a hardware control logic, a hardware finite state machine (FSM), or a digital signal processor (DSP) 40. Meanwhile, in the disclosure, the term `processor 40' may be used as a meaning including a central processing unit (CPU), a graphic processing unit (GPU), and a main processing unit (MPU), etc.

According to an embodiment, the processor 40 may control the display 10 to display a content. While a content is displayed through the display 10, the processor 40 may detect the temperature according to heat generation of the electronic device 100 through the sensor 20. If the detected temperature is greater than or equal to the preset first threshold temperature, the processor 40 may control the display 10 to display at least one element among the plurality of elements included in the content in the preset color. The processor 40 may identify the at least one element to be displayed in the preset color among the plurality of elements based on the types of the plurality of elements. Also, the processor 40 may identify the at least one element to be displayed in the preset color among the plurality of elements by using a trained neural network model. Meanwhile, the preset color may be green, and the at least one element may include a figure consisting of a text and one color among the plurality of elements. For example, in case the detected temperature is greater than or equal to the preset first threshold temperature, the processor 40 may control the display 10 to display 'the text' among the plurality of elements in the preset color, and control the display 10 to display 'the figure consisting of one color' among the plurality of elements in the preset color.

According to an embodiment, the processor 40 may control the display 10 to display a content through a green LED, a blue LED, and a first red LED. The processor 40 may detect the temperature according to heat generation of the electronic device 100 while the content is displayed through the green LED, the blue LED, and the first red LED, and if the detected temperature is greater than or equal to a preset second threshold temperature, the processor 40 may control the display 10 such that the content is displayed through the green LED, the blue LED, the first red LED, and a second red LED. Further, if the detected temperature is greater than or equal to a third threshold temperature preset as a value bigger than the second threshold temperature, the processor 40 may control the display 10 such that the content is displayed through the green LED, the blue LED, and the second red LED. Meanwhile, a central wavelength of a light emitted through the first red LED may be greater than or equal to 630nm and smaller than 650nm, and a central wavelength of a light emitted through the second red LED may be greater than or equal to 615nm and smaller than 630nm.

According to an embodiment, the processor 40 may display a content through a green LED, a blue LED, and a red LED. The processor 40 may detect a temperature according to heat generation of the electronic device 10 while the content is displayed through the green LED, the blue LED, and the red LED. If the detected temperature is greater than or equal to a preset fourth threshold temperature, the processor 40 may control the display 10 such that the luminance of a light emitted through the red LED is reduced. Further, if the detected temperature is greater than or equal to a fifth threshold temperature set as a value bigger than the fourth threshold temperature, the processor 40 may control the display 10 such that a light is not emitted through the red LED. Meanwhile, if the detected temperature is greater than or equal to the preset fourth threshold temperature, the processor 40 may control the display 10 such that the luminance of a light emitted through the red LED is linearly reduced until the detected temperature becomes greater than or equal to the fifth threshold temperature.

Meanwhile, as described above, the electronic device according to the disclosure may be augmented reality (AR) glasses, and each of the plurality of LEDs may be a micro LED of which horizontal length and vertical length are respectively smaller than or equal to 100*µ*m.

As the various embodiments according to the disclosure based on control by the processor 40 were described above with reference to FIG. 1 to FIG. 11, overlapping explanation will be omitted.

FIG. 13 is a block diagram illustrating a detailed configuration of an electronic device according to an embodiment of the disclosure.

Specifically, FIG. 13 is a block diagram of the electronic device 100 inside a network environment 1000 according to the various embodiments. Referring to FIG. 13, in the network environment 1000, the electronic device 100 may communicate with an electronic device 400 through a first network 98 (e.g.: a near field wireless communication network), or communicate with at least one of an electronic device 200 or a server 300 through a second network 99 (e.g.: a long distance wireless communication network). According to an embodiment, the electronic device 100 may communicate with the electronic device 200 through the server 300.

Also, according to an embodiment, the electronic device 100 may include a processor 40, a memory 30, an input module 76, an acoustic output module 60, a display module 10, an audio module 70, a sensor module 20, an interface 77, a connection terminal 78, a haptic module 79, a camera module 80, a power management module 88, a battery 89, a communication module 50, a subscriber identification module 96, or an antenna module 97. In some embodiments, in the electronic device 100, at least one (e.g.: the connection terminal 78) of these components may be omitted, or one or more other components may be added. Also, in some embodiments, some (e.g.: the sensor module 20, the camera module 80, or the antenna module 97) of these components may be integrated as one component (e.g.: the display module 10).

The display module 10 may visually provide information to the outside (e.g.: a user) of the electronic device 100. The display module 10 may include, for example, a display, a hologram device, or a projector, and a control circuit for controlling the device. According to an embodiment, the display module 10 may include a touch sensor set to detect a touch, or a pressure sensor set to measure the strength of a force generated by the touch. In particular, a user interface (UI) provided through the display module 10 will be described in detail with reference to FIG. 5 to FIG. 7.

The sensor module 20 may detect an operation state (e.g.: the power or the temperature) of the electronic device 100, or an external environment state (e.g.: a user state), and generate an electric signal or a data value corresponding to the detected state. According to an embodiment, the sensor module 20 may include, for example, a gesture sensor, a gyro sensor, a barometric sensor, a magnetic sensor, an acceleration sensor, a grip sensor, a proximity sensor, a color sensor, an infrared (IR) sensor, a bio sensor, a temperature sensor, a humidity sensor, or an illumination sensor.

The memory 30 may store various data used by at least one component (e.g.: the processor 40 or the sensor module 20) of the electronic device 100. The data may include, for example, software (e.g.: the program 90) and input data or output data regarding instructions related thereto. The memory 30 may include a volatile memory 32 or a non-volatile memory 34.

The processor 40 may, for example, control at least one other component (e.g.: a hardware or software component) of the electronic device 100 connected to the processor 40 by executing the software (e.g.: the program 90), and perform various kinds of data processing or operations.

According to an embodiment, as at least a part of data processing or an operation, the processor 40 may store an instruction or data received from another component (e.g.: the sensor module 20 or the communication module 50) in the volatile memory 32, process the instruction or the data stored in the volatile memory 32, and store the result data in the non-volatile memory 34. Also, according to an embodiment, the processor 40 may include a main processor 42 (e.g.: a central processing unit or an application processor) or a subsidiary processor 44 (e.g.: a graphic processing device, a neural processing unit (NPU), an image signal processor, a sensor hub processor, or a communication processor) that can be operated independently from or together with the main processor 42. For example, in case the electronic device 100 includes the main processor 42 or the subsidiary processor 44, the subsidiary processor 44 may be set to use lower power than the main processor 42, or to be specified for a designated function. The subsidiary processor 44 may be implemented separately from the main processor 42, or as a part thereof.

The subsidiary processor 44 may, for example, control at least some of the functions or the states related to at least one component (e.g.: the display module 10, the sensor module 20, or the communication module 50) among the components of the electronic device 100 in place of the main processor 42 while the main processor 42 is in an inactive (e.g.: sleep) state, or together with the main processor 42 while the main processor 42 is in an active (e.g.: application executing) state. According to an embodiment, the subsidiary processor 44 (e.g.: an image signal processor or a communication processor) may be implemented as a part of another component (e.g.: the camera module 80 or the communication module 50) that is functionally related.

According to an embodiment, the subsidiary processor 44 (e.g.: a neural network processing device) may include a hardware structure specified for processing of an artificial intelligence model. An artificial intelligence model may be generated through machine learning. Such learning may be performed, for example, in the electronic device 100 itself wherein the artificial intelligence model is performed, or may be performed through a separate server. Learning algorithms may include, for example, supervised learning, unsupervised learning, semi-supervised learning, or reinforcement learning, but learning algorithms are not limited to the aforementioned examples. An artificial intelligence model may include a plurality of artificial neural network layers. An artificial neural network may be one of a deep neural network (DNN), a convolutional neural network (CNN), a recurrent neural network (RNN), a restricted Boltzmann Machine (RBM), a deep belief network (DBN), a bidirectional recurrent deep neural network (BRDNN), deep Q-networks, or a combination of two or more of the above, but is not limited to the aforementioned examples. An artificial intelligence model may additionally or alternatively include a software structure other than a hardware structure.

The communication module 50 may support establishment of a direct (e.g.: wired) communication channel or a wireless communication channel between the electronic device 100 and an external electronic device (e.g.: the electronic device 200, the server 300, or the electronic device 400), and performing of communication through the established communication channel. The communication module 50 may include at least one communication processor that is operated independently from the processor 40 (e.g.: an application processor), and supports direct (e.g.: wired) communication or wireless communication.

According to an embodiment, the communication module 50 may include a wireless communication module 12 (e.g.: a cellular communication module, a near field wireless communication module, or a global navigation satellite system (GNSS) communication module) or a wired communication module 14 (e.g.: a local area network (LAN) communication module, or a power line communication module). A corresponding communication module among these communication modules may communicate with the external electronic device 200 through a first network 98 (e.g.: a near field communication network such as Bluetooth, wireless fidelity (WiFi) direct, or infrared data association (IrDA)) or a second network 99 (e.g.: a long distance communication network such as a legacy cellular network, a 5G network, a next generation communication network, the Internet, or a computer network (e.g.: a LAN or a WAN)). These several kinds of communication modules may be integrated as one component (e.g.: a single chip), or implemented as a plurality of components (e.g.: a plurality of chips) separate from one another. The wireless communication module 12 may identify or authenticate the electronic device 100 in a communication network such as the first network 98 or the second network 99 by using subscriber information (e.g.: an international mobile subscriber identity (IMSI)) stored in the subscriber identification module 96.

The wireless communication module 12 may support the 5G network after the 4G network and a next generation communication technology, e.g., a new radio (NR) access technology. The NR access technology may support high speed transmission of high capacity data (enhanced mobile broadband (eMBB)), minimalization of terminal power and access of a plurality of terminals (massive machine type communications (mMTC)), or ultra-reliable and low-latency communications (URLLC). The wireless communication module 12 may support, for example, a high frequency bandwidth (e.g.: an mmWave bandwidth) for achievement of a high data transmission rate. The wireless communication module 12 may support various technologies for securing performance in a high frequency bandwidth, e.g., technologies such as beamforming, massive multiple-input and multiple-output (MIMO), full dimensional MIMO (FD-MIMO), an array antenna, analog beam-forming, or a large scale antenna. The wireless communication module 12 may support various requirements prescribed in the electronic device 100, an external electronic device (e.g.: the electronic device 200), or a network system (e.g.: the second network 99). According to an embodiment, the wireless communication module 12 may support a peak data rate (e.g.: 20Gbps or higher) for realizing eMBB, a loss coverage (e.g.: 164dB or lower) for realizing mMTC, or U-plane latency (e.g.: 0.5ms or lower of each of a downlink (DL) and an uplink (UL), or 1ms or lower of a round trip) for realizing URLLC.

The acoustic output module 60 may output an acoustic signal to the outside of the electronic device 100. The acoustic output module 60 may include, for example, a speaker or a receiver. The speaker may be used for general uses such as reproduction of multimedia or reproduction of recording. The receiver may be used for receiving an incoming call. According to an embodiment, the receiver may be implemented as a separate component from the speaker, or as a part thereof.

The audio module 70 may convert a sound into an electric signal, or convert an electric signal into a sound, reversely. According to an embodiment, the audio module 70 may acquire a sound through the input module 76, or output a sound through the acoustic output module 60, or an external device (e.g.: the electronic device 400) (e.g.: a speaker or a headphone) directly or wirelessly connected to the electronic device 100.

The input module 76 may receive an instruction or data to be used for the components (e.g.: the processor 40) of the electronic device 100 from the outside (e.g.: a user) of the electronic device 100. The input module 76 may include, for example, a microphone, a mouse, a keyboard, a key (e.g.: a button), or a digital pen (e.g.: a stylus pen).

The interface 77 may support one or more designated protocols that can be used for the electronic device 100 to be directly or wirelessly connected with an external device (e.g.: the electronic device 400). According to an embodiment, the interface 77 may include, for example, a high definition multimedia interface (HDMI), a universal serial bus (USB) interface, an SD card interface, or an audio interface.

The connection terminal 78 may include a connector through which the electronic device 100 can be physically connected to an external device (e.g.: the electronic device 400). According to an embodiment, the connection terminal 78 may include, for example, an HDMI connector, a USB connector, an SD card connector, or an audio connector (e.g.: a headphone connector).

The haptic module 79 may convert an electric signal into a mechanical stimulus (e.g.: vibration or a movement) that a user can recognize through a tactile sense or a kinesthetic sense or an electric stimulus. According to an embodiment, the haptic module 79 may include, for example, a motor, a piezoelectric element, or an electric stimulus device.

The camera module 80 may photograph a still image and a moving image. According to an embodiment, the camera module 80 may include one or more lenses, image sensors, image signal processors, or flashes.

The power management module 88 may manage power supplied to the electronic device 100. According to an embodiment, the power management module 88 may be implemented, for example, as at least a part of a power management integrated circuit (PMIC).

The battery 89 may supply power to at least one component of the electronic device 100. According to an embodiment, the battery 89 may include, for example, a primary battery that cannot be recharged, a secondary battery that can be charged, or a fuel battery.

The antenna module 97 may transmit a signal or power to the outside (e.g.: an external electronic device) or receive them from the outside. According to an embodiment, the antenna module 97 may include an antenna including an emitter consisting of a conductor or a conductive pattern formed on a substrate (e.g.: a PCB). According to an embodiment, the antenna module 97 may include a plurality of antennas (e.g.: array antennas). In this case, at least one antenna appropriate for a communication method used in a communication network such as the first network 98 or the second network 99 may be selected from the plurality of antennas by, for example, the communication module 50. A signal or power may be transmitted or received between the communication module 50 and an external electronic device through the selected at least one antenna. According to some embodiments, another component (e.g.: a radio frequency integrated circuit (RFIC)) may additionally be formed as a part of the antenna module 97 other than an emitter.

According to the various embodiments, the antenna module 97 may form an mmWave antenna module. According to an embodiment, an mmWave antenna module may include a printed circuit board, an RFIC which is arranged on the first surface (e.g.: the lower surface) of the printed circuit board or in an adjacent location thereto and which can support a designated high frequency bandwidth (e.g.: an mmWave bandwidth), and a plurality of antennas (e.g.: array antennas) which are arranged on the second surface (e.g.: the upper surface or a side surface) of the printed circuit board or in an adjacent location thereto and which can transmit or receive a signal of the designated high frequency bandwidth.

The program 90 may be stored as software in the memory 30, and may include, for example, an application 91, a middleware 93, or an operating system 95. In the disclosure, the term 'program' may be replaced by the term `software.'

At least some of the above components may be connected with one another through communication methods among adjacent devices (e.g.: a bus, a general purpose input and output (GPIO), a serial peripheral interface (SPI), or a mobile industry processor interface (MIPI)), and exchange signals (e.g.: instructions or data) with one another.

According to an embodiment, instructions or data may be transmitted or received between the electronic device 100 and the external electronic device 200 through the server 300 connected with the second network 99. Each of the electronic devices 200, or 400 may be a device of a type that is identical to or different from the electronic device 100. According to an embodiment, all or some of the operations executed at the electronic device 100 may be executed in one or more external electronic devices among the external electronic devices 200, 300, or 400. For example, in case the electronic device 100 needs to perform a function or a service automatically, or in response to a request from a user or another device, the electronic device 100 may request one or more external electronic devices to perform at least a part of the function or the service instead of executing the function or the service by itself, or in addition to it. The one or more external electronic devices that received the request may execute at least a part of the requested function or service, or an additional function or service related to the request, and transmit the result of execution to the electronic device 100. The electronic device 100 may process the result as it is or additionally, and provide the result as at least a part of a response to the request.

For this, a cloud computing technology, a distributive computing technology, mobile edge computing (MEC), or a client-server computing technology may be used, for example. The electronic device 100 may provide, for example, ultra low-latency service by using distributed computing or mobile edge computing. In another embodiment, the electronic device 200 may include an Internet of Things (IoT) device. The server 300 may be an intelligent server using machine learning and/or a neural network. According to an embodiment, the external electronic device 200 or the server 300 may be included inside the second network 99. The electronic device 100 may be applied to an intelligent service (e.g.: smart home, smart city, smart car, or healthcare) based on 5G communication technologies and IoT related technologies.

Each of the components (e.g.: a module or a program) according to the aforementioned various embodiments of the disclosure may consist of a singular object or a plurality of objects. In addition, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner.

Also, operations performed by a module, a program, or other components according to the various embodiments may be executed sequentially, in parallel, repetitively, or heuristically. Or, at least some of the operations may be executed in a different order or omitted, or other operations may be added.

Meanwhile, the term "part" or "module" used in the disclosure may include a unit implemented as hardware, software, or firmware, and may be interchangeably used with, for example, terms such as a logic, a logical block, a component, or a circuit. In addition, "a part" or "a module" may be a component constituted as an integrated body or a minimum unit or a part thereof performing one or more functions. For example, a module may be constituted as an application-specific integrated circuit (ASIC).

Further, the various embodiments of the disclosure may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: the electronic device 100).

In case an instruction is executed by a processor, the processor may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic device comprising:
a display comprising a plurality of LEDs;
a sensor;
a memory; and
a processor configured to:
control the display to display a content,
detect a temperature according to heat generation of the electronic device through the sensor while the content is displayed through the display, and
based on the detected temperature being greater than or equal to a preset first threshold temperature, control the display to display at least one element among a plurality of elements included in the content in a preset color.

2. The electronic device of claim 1,
wherein the processor is configured to:
identify the at least one element to be displayed in the preset color among the plurality of elements based on the types of the plurality of elements.

3. The electronic device of claim 1,
wherein the processor is configured to:
identify the at least one element to be displayed in the preset color among the plurality of elements by using a trained neural network model.

4. The electronic device of claim 1,
wherein the preset color is green, and
the at least one element comprises a figure consisting of a text and one color among the plurality of elements.

5. The electronic device of claim 1,
wherein the plurality of LEDs comprise a green LED, a blue LED, a first red LED, and a second red LED emitting a light of a central wavelength longer than the first red LED, and
the processor is configured to:
detect the temperature through the sensor while the content is displayed through the green LED, the blue LED, and the first red LED, and
based on the detected temperature being greater than or equal to a preset second threshold temperature, control the display such that the content is displayed through the green LED, the blue LED, the first red LED, and the second red LED.

6. The electronic device of claim 5,
wherein the processor is configured to:
based on the detected temperature being greater than or equal to a third threshold temperature preset as a value bigger than the second threshold temperature, control the display such that the content is displayed through the green LED, the blue LED, and the second red LED.

7. The electronic device of claim 6,
wherein a central wavelength of a light emitted through the first red LED is greater than or equal to 630nm and smaller than 650nm, and
a central wavelength of a light emitted through the second red LED is greater than or equal to 615nm and smaller than 630nm.

8. The electronic device of claim 1,
wherein the electronic device is augmented reality (AR) glasses, and
the horizontal length and the vertical length of each of the plurality of LEDs are smaller than or equal to 100*µ*m.

9. A control method of an electronic device, the method comprising:
displaying a content through a display comprising a plurality of LEDs;
detecting a temperature according to heat generation of the electronic device while the content is displayed through the display; and
based on the detected temperature being greater than or equal to a preset first threshold temperature, displaying at least one element among a plurality of elements included in the content in a preset color.

10. The control method of an electronic device of claim 9, comprising:
identifying the at least one element to be displayed in the preset color among the plurality of elements based on the types of the plurality of elements.

11. The control method of an electronic device of claim 9, comprising:
identifying the at least one element to be displayed in the preset color among the plurality of elements by using a trained neural network model.

12. The control method of an electronic device of claim 9,
wherein the preset color is green, and
the at least one element comprises a figure consisting of a text and one color among the plurality of elements.

13. The control method of an electronic device of claim 9,
wherein the plurality of LEDs comprise a green LED, a blue LED, a first red LED, and a second red LED emitting a light of a central wavelength longer than the first red LED, and
further comprising:
detecting the temperature while the content is displayed through the green LED, the blue LED, and the first red LED; and
based on the detected temperature being greater than or equal to a preset second threshold temperature, displaying the content through the green LED, the blue LED, the first red LED, and the second red LED.

14. The control method of an electronic device of claim 11, further comprising:
based on the detected temperature being greater than or equal to a third threshold temperature preset as a value bigger than the second threshold temperature, displaying the content through the green LED, the blue LED, and the second red LED.

15. A control method of an electronic device, the method comprising:
displaying a content through a display comprising a red LED, a green LED, and a blue LED;
detecting a temperature according to heat generation of the electronic device while the content is displayed through the red LED, the green LED, and the blue LED; and
based on the detected temperature being greater than or equal to a preset fourth threshold temperature, controlling the display such that luminance of a light emitted through the red LED is reduced.
